# EUROPEAN PATENT APPLICATION

(11) **EP 4 611 280 A1**
(43) Date of publication of application: **03.09.2025**
(21) Application number: 24160952.8
(22) Date of filing: 01.03.2024
(51) Int. Cl.: H04B 10/112, H04B 10/118

(54) **OPTICAL RECEIVER, COMMUNICATION TERMINAL AND SYSTEM AS WELL AS APPARATUS COMPRISING SAME**

(71) Applicant: Airbus S.A.S., 31700 Blagnac (FR)
(72) Inventor: TEPPER, Jan, 82024 Taufkirchen (DE); BARRIOS, Ricardo, 82024Taufkirchen (DE)
(74) Representative: OTN Airbus SAS

(57) **Abstract**

An optical receiver (4), a communication terminal (3) with an optical receiver (4), an optical communication system (2) with a communication terminal (3), and an apparatus (1), such as a vehicle, in particular an aircraft (1a), with a communication system (2) are described, the optical receiver (4) comprising at least one sensor array (21) having sensor elements (31) configured to detect a light beam (L) carrying data, a capturing unit (22) configured to read out light values from the sensor elements (31) based on the detected light beam (L), and a processing unit (23) configured to obtain the light values and to extract at least a part of the data carried by the detected light beam (L).

## Description

### Technical Field

The present disclosure relates to the field of Free Space Optical Communication (FSOC). In particular, the present disclosure relates to an optical receiver for a communication terminal of an optical communication system, in particular an FSOC system involving a vehicle, such as an aircraft, to a communication terminal for an optical communication system, in particular an FSOC system involving a vehicle, such as an aircraft, to an optical communication system, in particular an FSOC system involving a vehicle, such as an aircraft, and to an apparatus, such as a vehicle, in particular an aircraft, comprising an optical communication system.

### Technical Background

FSOC are known from the prior art. In common scenarios for FSOC, (multiple) communication partners want to communicate optically with each other through free space. This might be the case because the parties want to remain radiosilent, e.g., for confidentiality reasons. Furthermore, FSOC can commonly achieve potentially higher data rates and does not require spectrum licensing as opposed to RF communication. This especially applies to FSCO for military but also for space purposes.

EP 3 934 129 A1, for example, relates to a pointing unit for use with a free space optical communications terminal comprising an optical source. The pointing unit comprises a first portion comprising a mirrored surface, the first portion being orientatable relative to an optical beam produced by the optical source and incident on the mirrored surface in use to direct a reflection of the optical beam from the mirrored surface towards a target. The first portion further comprises a directional radio frequency antenna. Also disclosed is a pointing system, a free space optical communications terminal, a vehicle, and a method.

EP 3 970 286 B1 refers to a terminal for optical communication by laser signals comprising a matrix image sensor that is used as a tracking and acquisition detector. The matrix image sensor is used simultaneously to check that a portion of the laser signals that are received by the terminal are injected into an optical fibre. A spectral filter element is associated with the matrix image sensor to allow such a combination of functions. The terminal can then be particularly compact and lightweight.

EP 3 836 427 A1 describes an aircraft including a flat optical communication terminal on an external surface of the aircraft, the flat optical communication terminal being configured to communicate with a ground station via a freespace optical communication link.

Traditional FSOC fibre-coupled systems are highly directional and complex. Their complexity is a result of the need to couple the light into an optical fibre. This means, precise tracking and in some cases even wavefront correction are required which can currently only be managed by fast steering mirrors and adaptive optics. Those involve mechanically moving parts, are expensive, bulky and can be a source of lack of reliability in that they are prone to failure.

### Summary

It may thus be seen as an object to improve known FSOC systems. In particular, it can be seen as an object to provide an FSOC system that is relatively low cost, simple, light, small and/or reliable. These objects are solved by the subject matter of the independent claims.

In particular, an optical receiver for a communication terminal of an optical communication system, in particular an FSOC system involving a vehicle, such as an aircraft, is provided, comprising at least one sensor array having sensor elements configured to detect a light beam carrying data, a capturing unit configured to read out light values from the sensor elements based on the detected light beam, and a processing unit configured to obtain the light values and to extract at least a part of the data carried by the detected light beam.

A communication terminal for an optical communication system, in particular an FSOC system involving a vehicle, such as an aircraft, is provided, comprising at least one corresponding optical receiver.

An optical communication system, in particular an FSOC system involving a vehicle, such as an aircraft, is provided, comprising at least one corresponding optical receiver and/or at least one corresponding communication terminal.

An apparatus, such as a vehicle, in particular an aircraft, is provided comprising a corresponding optical communication system.

Furthermore, a communication system configuration program for configuring a computing device comprises instructions which, when the program is executed by a computer, cause the computer to carry out a corresponding method for configuring a communication system. A computer-readable data carrier has stored thereon the communication system configuration program. The computer-readable data carrier may include and/or be comprised of a computer-readable medium and/or a data carrier signal carrying the communication system configuration program and/or comprising respective instructions which, when the program is executed by a computer, cause the computer to carry out a method for configuring a communication terminal.

The processing unit may further be connected to a tracking control unit configured to target the at least one sensor array with the light beam. By using a sensor array that has a wide field of view, the tracking control unit only needs to make sure that the beam impinges on the sensor array. The solution particularly provides a bigger field of view than comparable optical receivers of FSOC systems as known from the prior art.

The proposed solution has the advantage over the prior art that the above-mentioned issues of previously known FSOC systems resolved or at least highly mitigated. According to the proposed solution, a tracking device only needs to make sure that the light beams impinges on the sensor array. Sensor can typically have a diameter of about 1cm, whereas single-mode optical fibres are ~10µm in size, the proposed solution reduces the need for precise tracking and a perfect wavefront of the light beam.

Further developments can be derived from the dependent claims and from the following description. Features described with reference to the optical communication system and its components may be implemented as method steps, or vice versa. Therefore, the description provided in the context of the optical communication system applies in an analogous manner also to respective methods. In particular, the functions of the optical communication system and of its components may be implemented as steps of methods and the method steps may be implemented as functions of the optical communication system.

According to an aspect of an optical receiver, the sensor elements are arranged as a sensor field extending along a first array direction and along a second array direction. By arranging the sensor elements along a first direction and along a second error direction, the sensor elements form a sensor matrix. Such a sensor matrix may facilitate addressing the single sensor elements by means of the capturing unit. This further helps to provide simple and robust means for optical communication.

According to an aspect of an optical receiver, wherein the sensor array is provided in the form of an image sensor and/or a focal plane array. Using an image sensor and/or a focal plane array may enable to at least partially rely on existing camera concepts or at least components thereof. Using existing camera concepts may not be restricted to frame-based camera concepts but may also include event-based camera concepts. However, the application of frames and framerate does not apply anymore if data outputs are obtained as asynchronous streams of timestamps with coordinates of respective sensor elements. Nevertheless, integrating these streams over a certain time increment (e.g., 10µs) constructs a frame with a certain frame rate (e.g., 1/10µs=100kHz).

Considering that event-based camera concepts only detect changes in brightness, the light beam can be a modulated beacon (e.g., with a modulation rate of 1 kHz) such that the event-camera sees it even when the beam stays on the same spot on the image. Then, the sensor elements to be read out would be modulated. Event-based camera concepts typically allow for faster data acquisition rates than frame-based camera concepts and thereby may help in enhancing detection of the modulation. For example, if the beam carries data and the sensor array is used to read this data, the light beam can be modulated accordingly. However, if during a tracking phase and/or when the sensor is used for tracking, the light beam does not necessarily have to be modulated by the data stream, but might be rather constant, then a certain modulation of the light beam may still be applied in order enhance detectability of the light beam by means of an event-based camera. In any case, using image sensors and/or focal plane arrays helps in further facilitating implementation and reducing costs of the optical receiver.

According to an aspect of an optical receiver, the optical receiver further comprises at least one multiplexing arrangement. The multiplexing arrangement allows for creating multiple light beams and/or light spots. Accordingly, the amount of data that can be captured by the optical receiver may be multiplied according to the number of light beams and/or light spots. This helps in increasing data transfer rates of the optical receiver.

According to an aspect of an optical receiver, the multiplexing arrangement comprises at least one beam splitting element. The at least one beam splitting element may split up the light beam such that a certain arrangement of light spots hits the sensor array. The arrangement of the light spots on the sensor area (for example, 2x3 sensor elements) can be used as a further security measure. This arrangement has its own particularity and can be kept secret. For more enhanced security, a transmitter generating the light beam may use a tuneable laser (in wavelength) during an initial handshake phase which allows for projecting a certain pattern onto the sensor array. Consequently, the at least one beam splitting element allows to further increase security as well as data transfer rates of the optical receiver.

According to an aspect of an optical receiver, the multiplexing arrangement comprises at least one dispersive element for separating different wavelength fractions of the light beam from each other. The dispersive element may serve as a wavelength splitter, splitting the light beam into the different wavelength fractions along the first array direction. Splitting the light beam into multiple beams of different wavelengths provides a simple and reliable way for increasing security as well as data transfer rates of the optical receiver.

According to an aspect of an optical receiver, the multiplexing arrangement further comprises at least one birefringent element for separating different polarisation fractions of the light beam from each other. The dispersive element may serve as a polarisation splitter, splitting the light beam into its different polarisation fractions along the second array direction. A focusing element may follow the dispersive element and/or the birefringent element along a light path of the light beam through the multiplexing arrangement towards the sensor array. Consequently, the dispersive element and/or birefringent element provide simple and robust ways for increasing security as well as data transfer rates of the optical receiver.

According to an aspect of an optical receiver, the processing unit is configured to control the capturing unit such that a limited number of the sensor elements is being read out in operation of the optical receiver, the limited number of sensor elements forming a sensor subset covering at least one light spot where the light beam hits the sensor array. Limiting the number of sensor elements being read enables to reduce a data rate that has to be processed by the capturing unit as well as by the processing unit. This helps in further simplifying respective data processing and in facilitating FSOC.

According to an aspect of an optical receiver, the processing unit is configured to arrange a virtual bounding box peripherally around the sensor subset. The virtual bounding box can surround the sensor subset. The virtual bounding box can determine the sensor subset. A size of the virtual bounding box may be variable and determined by the processing unit. The size of the virtual bounding box may be adaptive and determined based on an expected movement of the light beam(s) on the sensor array and/or based on a history of a movement of the light beam(s) on the sensor array.

For example, the size of the virtual bounding box may be predetermined and/or adaptively calculated by the processing unit, taking into account a read-out-rate, e.g., a frame rate, necessary for tracking (favours smaller virtual bounding boxes) versus the expected magnitude of sudden vibrational occurrences (favours bigger virtual bounding boxes). A position of the virtual bounding box may be recalculated after every read out of the virtual bounding box. An algorithm for recalculation can be predetermined or the processing unit may employ machine learning to improve its recalculation algorithm in the course of operation. Consequently, the virtual bounding box helps in further increasing robustness of FSOC.

According to an aspect of an optical receiver, the processing unit is configured to track the at least one light spot with the virtual bounding box. The processing unit tracks the light spot with the virtual bounding box to move the sensor subset along with the light spot. Advanced tracking can be performed for more than one light spot. For example, when more than one light spot hits the sensor array, tracking algorithms may be employed that make use of the fact that the light spots are in a predefined relative arrangement with respect to each other. In other words, the light spots may have fixed relative positions, such that they form a certain pattern of light spots. This helps in further improving security and robustness of FSOC.

According to an aspect of an optical receiver, the processing unit is configured to adapt a read-out rate with which the capturing unit reads out the light values from the sensor elements detecting the light beam. The read-out rate may be adaptable both for the bounding box for tracking as well as for the sensor elements, e.g. certain pixels, that contain the data. By adapting the read-out rate, an amount of data to be processed by the processing unit can be optimised, i.e., generally minimised. Thereby, efficiency of the optical receiver can be improved.

According to an aspect of an optical receiver, the optical receiver further comprises a tracking control unit configured to guide the light beam onto the sensor array in a targeting phase, wherein the capturing unit is configured to read out essentially all sensor elements of the sensor array at a targeting rate in the targeting phase, and to read out at least a selected number of sensor elements of the sensor array at a transmission rate for extracting at least a part of the data in a transmission phase when the light beam hits the sensor array. A feedback loop connected to the processing unit may be configured such that the tracking unit aims to keep the at least one light spot, and therefore the virtual bounding box, within a central area of the sensor array.

Every time the virtual bounding box is being read out, it may be computed whether and where the at least one light beam has moved within the box. This information can be passed on to the tracking control unit in order to appoint the at least one light beam to a respective nominal position. An intermediate read-out-rate, e.g., a frame rate, of the virtual bounding box may be predetermined or adaptable during operation. Higher virtual bounding box read-out-rates may help in decreasing an overall number of sensor elements to be read out but favours robustness of data acquisition by the optical receiver. In FSO one often described the phases as PAT: Pointing: directing the telescope of counter partners to each other. Acquisition: Series of steps for scanning uncertainty cone, until light can steadily be coupled into the detection device on both counter partners. Only then can a so-called "comms session" begin. Tracking: Maintaining the light stable on the comms photodetector(s), by compensating for drifting and micro-vibrations. Consequently, the tracking control unit helps in further improving security and robustness of FSOC.

### Brief Description of the Drawings

The subject matter will hereinafter be described in conjunction with the following drawing figures, wherein like numerals denote like elements, and wherein:
Fig. 1 is a schematic representation of apparatuses comprising an optical communication system with a communication terminal and an optical receiver.
Fig. 2 is a schematic representation of components of the optical receiver.
Fig. 3 is a schematic representation of a sensor array of the optical receiver.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

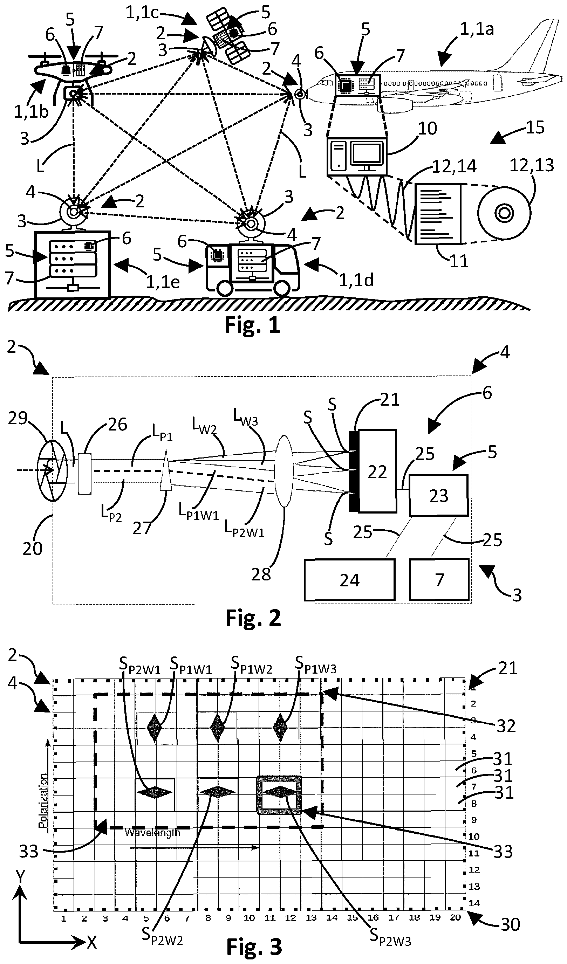

Fig. 1 shows a schematic representation of apparatuses 1 in the form of vehicles, such as an aircraft 1a, an unmanned aerial vehicle (UAV) 1b, a satellite 1c and/or a ground vehicle 1d, as well as in the form of a ground station 1e. The apparatuses are each provided with an optical communication system 2 comprising a communication terminal 3 with an optical receiver 4, optionally an optical transmitter (not shown) and a control arrangement 5. The control arrangement 5 may comprise a control module 6 and a data module 7 which may at least in part be provided by means and/or in the form of and/or configured by a computing device 10.

The computing device 10 may be a part of and/or integrated into the control arrangement 5. The computing device 10 may be configured to execute a communication system configuration program 11. A computer-readable data carrier 12 has stored thereon the communication system configuration program 11 and may take the form of a computer-readable medium 13 and/or data carrier signal 14. When carrying out the computer system integration program 11, the computing device 10 may enable the communication terminal 3 and/or the control arrangement 5 to communicate as a part of the optical communication system 2. Therefore, the computing device 10, communication system configuration program 11, computer-readable data carrier 12, computer-readable medium 13, and/or data carrier signal 14 may constitute or be part of a communication system configuration arrangement 15 for configuring the optical communication system 2 or any component thereof for optical communication through at least one light beam L.

Fig. 2 is a schematic representation of components of the optical receiver 4 as a part of the communication terminal 3 of the optical communication system 2. The optical receiver 4 may have an enclosure 20 accommodating a sensor array 21, a capturing unit 22, a processing unit 23, a tracking control unit 24 and the data module 7 connected to each other via respective connections 25 which may include any wired and/or wireless data and/or energy transmission lines. The sensor array 21, capturing unit 22, processing unit 23 and/or tracking control unit 24 may be a part of or constitute the control module 6. Furthermore, the optical receiver 4 may comprise a birefringent element 26, a dispersive element 27 and/or a focusing element 28 which may be accommodated within the enclosure 20.

The light beam L may enter the enclosure 20 through an aperture 29 of the optical receiver 4. Afterwards, the light beam L may pass the birefringent element 26 which separates the light beam according to its respective polarisations P into a light beam with a first polarisation L_{P1} and a light beam of a second polarisation L_{P2}. After passing the birefringent element 26, the light beam L or the light beam of the first polarisation L_{P1} and the light beam of a the second polarisation L_{P2} may pass the dispersive element 27 which separates the light beam L into light beams having different wavelengths L_{W1}, L_{W2}, L_{W3} and/or in case light beams of different polarisations L_{P1}, L_{P2} are being further split up, the resulting light beams L_{P1W1}, L_{P2W1}, L_{P1W2}, L_{P2W2}, L_{P1W3}, L_{P2W3} have respective different polarisations and wavelengths. The focusing element 28 focuses the light beams onto the sensor 1 and respective light spots S.

Fig. 3 is a schematic representation of the sensor array 21 of the optical receiver 4. The sensor array 21 comprises a field 30 of a number of sensor elements 31 equidistantly arranged along a first array direction X and along a second array direction Y. The first array direction X is associated to different wavelengths W. The second array direction Y discussed different polarisations P. Hence, the light beams light beams L_{P1W1}, L_{P2W1}, L_{P1W2}, L_{P2W2}, L_{P1W3}, L_{P2W3} may impinge on the field 30 as light spots S_{P1W1}, S_{P2W1}, S_{P1W2}, S_{P2W2}, S_{P1W3}, S_{P2W3} with their respective different polarisations and/or wavelengths.

In operation, the capturing unit 22 reads out light values from the sensor elements 31. The processing unit 21 may create a virtual bounding box 32 bordering a certain sensor subset 33 of a desired number of the sensor elements 31. Such virtual bounding boxes 32 may be arranged peripherally around a certain number of light spots S. For example, they can be a virtual bounding box 32 encompassing a respective sensor subset 33 covering a certain light spot, S_{P2W3}, all light spots S_{P1W1}, S_{P2W1}, S_{P1W2}, S_{P2W2}, S_{P1W3}, S_{P2W3} and/or a desired number of light spots S.

The processing unit 21 connected to the capturing unit 22 is configured to optically and/or electronically process any analogue and/or digital data communicated via the light beam L, i.e., the respective light spots S. The processing unit 9 may act as a consumer of such data and/or provide the data to a user/consumer, such as the module 7 and/or an operator of the apparatus 1, in a respective consumable form. Furthermore, the processing unit 9 may carry out any measurement and/or control functions with respect to the optical communication system 2 and its operation, including any identification and/or tracking functions required for receiving the light beam L by means of the optical receiver 4 through the aperture 29.

The light beam L carrying data will be focussed onto a sensor array 21, which has a certain size, resolution, bit depth and read out rate. In order to reconstruct the data stream, the sensor array 21 needs to be read out at least as fast as the data rate (more precisely, the baud rate). For example, this may be directly limited by the frame rate of a camera for a certain area of interest, such as a sensor subset 33, if the sensor array 21 is provided in the form of an image sensor / focal plane array. If the frame rate equals the baud rate, some a priori clock synchronization should be ensured. If the frame rate is faster than the baud rate, an a posteriori clock recovery through digital processing by the processing unit 23 is possible.

By using a distinct set of wavelengths Wand polarizations P, a uniquely distinct pattern of light spots S may be created on the field 30 provided by the sensor array 21. Such a distinct pattern may be used, e.g., for friend or foe identification. There needs to be a minimum level of tracking of the communication partner to be performed with the help of the tracking control unit 24 to keep the light spots on the field 30. In order to increase the frame rate, and therefore the maximum data bandwidth, it can be helpful to reduce the sensor elements 31 that are being read out to a minimum instead of the full frame according to respective bounding boxes 32. However, for initial localization and tracking, bounding boxes 32 may be maximised and/or omitted.

A respective algorithm may follow the following logic: In an initial phase of communication, the pattern of light spots S may show up anywhere on the field 30. Therefore, the whole sensor array 21 needs to be read out and the position of the pattern on the sensor can be determined. From this point on, only the virtual bounding box 32 surrounding the pattern of life points S needs to be read out to maintain tracking and read out the data. Once the virtual bounding box 32 is found, the only sensor elements 31 that need to be read out can be read out with a modulated rate, e.g., a relatively high frame rate of 10kHz. The pattern of light spots S may move across the field 30 as the two communicating parties, such as different apparatuses 1, are likely to be in relative motion to each other. In order to determine this movement, the entire bounding box can be read out at some lower frequency (e.g., 100-1000Hz) depending on the relative motion of the involved apparatuses 1.

A change in position of a pattern of light spots S may be permanently calculated and the coordinates of the virtual bounding box 32 can be frequently updated accordingly. A possible tracking algorithm implemented by the tracking control unit 24 involve calculating a self-correlation for the known pattern of light spots S. If the pattern is completely lost from the virtual bounding box 32, the tracking algorithm may restart with the initial phase of reading out the entire sensor array 21 by means of the capturing unit 22. As to bit depth of respective values being read out from the sensor elements 31, certain modulation formats may be used that involve different amplitude levels such as PAM4, for example.

In other words, the following three image areas or subsets of sensor elements 31, e.g., pixels, may be defined and used according to respective requirements:
i) The complete sensor array 21, e.g., an entire frame, can only read-out on first acquisition of the light beam L and/or when a signal is lost, preferably at a relatively low frame rate.
ii) The virtual bounding box 32 can be read out with an intermediate frequency (e.g., 100Hz), to maintain tracking. A position of the virtual bounding box 32 may move as well as its size may change. Nevertheless, a feedback between the tracking control unit 24 and the sensor array 21 and/or capturing unit 23 can be configured such that the virtual bounding box 32 is essentially kept in the centre of the sensor array 21, e.g., in the image centre.
iii) Sensor elements 31 capturing data, e.g., data pixels, wich may constitute the sensor subset 33 can be read out at the highest frame rate (e.g., 100kHz). Either single sensor element 31 can be read out or some few sensor elements 31 can be read out around the brightest light spot S (e.g., 2x2 pixels per light spot S as illustrated in Fig). The read-out rate needs to be compliant with the baud rate of the transmission signal and shall oversample.

### List of Reference Signs

- 1: apparatus
- 1a: aircraft
- 1b: unmanned aerial vehicle (UAV)
- 1c: satellite
- 1d: ground vehicle
- 1e: ground station
- 2: optical communication system
- 3: communication terminal
- 4: optical receiver
- 5: control arrangement
- 6: control module
- 7: data module
- 10: computing device
- 11: communication system configuration program
- 12: computer-readable data carrier
- 13: computer-readable medium
- 14: data carrier signal
- 15: communication system configuration arrangement
- 20: enclosure
- 21: sensor array
- 22: capturing unit
- 23: processing unit
- 24: tracking control unit
- 25: connection
- 26: birefringent element
- 27: dispersive element
- 28: focusing element
- 29: aperture
- 30: field
- 31: sensor element
- 32: virtual bounding box
- 33: sensor subset
- L: light beam
- P: polarisation
- S: light spot
- W: wavelength

## Claims

1. Optical receiver (4) for a communication terminal (3) of an optical communication system (2), in particular an FSOC system involving a vehicle, such as an aircraft (1a), comprising
at least one sensor array (21) having sensor elements (31) configured to detect a light beam (L) carrying data,
a capturing unit (22) configured to read out light values from the sensor elements (31) based on the detected light beam (L), and
a processing unit (23) configured to obtain the light values and to extract at least a part of the data carried by the detected light beam (L).

2. Optical receiver (4) according to claim 1, wherein the sensor elements (31) are arranged as a sensor field (30) extending along a first array direction (X) and along a second array direction (Y).

3. Optical receiver (4) according to claim 1 or 2, wherein the sensor array (21) is provided in the form of an image sensor and/or a focal plane array.

4. Optical receiver (4) according to at least one of claims 1 to 3, further comprising at least one multiplexing arrangement.

5. Optical receiver (4) according to claim 4, wherein the multiplexing arrangement comprises at least one beam splitting element.

6. Optical receiver (4) according to claim 4 or 5, wherein the multiplexing arrangement comprises at least one dispersive element (27) for separating different wavelength fractions (W) of the light beam (L) from each other.

7. Optical receiver (4) according to at least one of claims 4 to 6, wherein the multiplexing arrangement further comprises at least one birefringent element (26) for separating different polarisation fractions (P) of the light beam (L) from each other.

8. Optical receiver (4) according to at least one of claims 1 to 7, wherein the processing unit (23) is configured to control the capturing unit (22) such that a limited number of the sensor elements (31) is being read out in operation of the optical receiver (4), the limited number of sensor elements (31) forming a sensor subset (33) covering at least one light spot (S) where the light beam (L) hits the sensor array (21).

9. Optical receiver (4) according to claim 7, wherein the processing unit (23) is configured to arrange a virtual bounding box (32) peripherally around the sensor subset (33).

10. Optical receiver (4) according to claim 9, wherein the processing unit (23) is configured to track the at least one light spot (S) with the virtual bounding box (32).

11. Optical receiver (4) according to at least one of claims 1 to 10, wherein the processing unit (23) is configured to adapt a read-out rate with which the capturing unit (22) reads out the light values (L) from the sensor elements detecting the light beam (L).

12. Optical receiver (4) according to at least one of claims 1 to 11, further comprising a tracking control unit (24) configured to guide the light beam (L) onto the sensor array (21) in a targeting phase, wherein the capturing unit (22) is configured to read out essentially all sensor elements (31) of the sensor array (21) at a targeting rate in the targeting phase, and to read out at least a selected number of sensor elements (31) of the sensor array (21) at a transmission rate for extracting at least a part of the data in a transmission phase when the light beam (L) hits the sensor array (21).

13. Communication terminal (3) for an optical communication system (2), in particular an FSOC system involving a vehicle, such as an aircraft (1a), comprising at least one optical receiver (4) according to claims 1 to 12.

14. Optical communication system (2), in particular an FSOC system involving a vehicle, such as an aircraft (1a), comprising at least one optical receiver (4) according to claims 1 to 12 and/or at least one communication terminal (3) according to claim 13.

15. An apparatus (1), such as a vehicle, in particular an aircraft (1a), comprising an optical communication system (2) according to claim 15.
